# EUROPÄISCHE PATENTSCHRIFT

(11) **EP 1 721 052 B1**
(45) Veröffentlichungstag und Bekanntmachung des Hinweises auf die Patenterteilung: **14.07.2010**
(21) Anmeldenummer: 05715601.0
(22) Anmeldetag: 28.02.2005
(51) Int. Cl.: E04F 13/08, F16B 37/04

(54) **SYSTEM ZUR BEFESTIGUNG VON PLATTENELEMENTEN**
SYSTEM FOR FASTENING PANEL ELEMENTS
SYSTEME POUR FIXER DES PANNEAUX

(30) Priorität: 26.02.2004 DE 102004009935
(43) Veröffentlichungstag der Anmeldung: 15.11.2006
(73) Patentinhaber: Secura Services AG, 8401 Winterthur (CH)
(72) Erfinder: Müller, Franz, 65205 Wiesbaden (DE)
(74) Vertreter: Erb, Henning
(86) Internationale Anmeldenummer: PCT/EP2005/002095
(87) Internationale Veröffentlichungsnummer: WO 2005/083194

(56) Entgegenhaltungen:
- DE-A1- 2 227 565
- DE-A1- 19 737 262
- FR-A- 2 468 784
- US-A- 4 789 286
- US-A1- 2002 048 497

## Beschreibung

Die vorliegende Erfindung befaßt sich mit einem Schnellbefestigungssystem zur Befestigung von Plattenelementen an Profilschienen mit im wesentlichen C-förmigem Querschnitt, wobei jedes Plattenelement mit Hilfe von Schnellbefestigern an Profilschienen festgelegt wird, die zuvor an einer Wand, Decke oder einer Dachkonstruktion festgelegt worden sind und die Schnellbefestiger jeweils eine Grundplatte, die an der Unterseite eines Plattenelements anbringbar ist, und ein Rastglied aufweisen, das beim Eindrücken in die Profilschiene gegen die Kraft einer Rückstellfeder ausweicht und beim Erreichen der Endstellung mit der Profilschiene verrastet.

Auf dem Bausektor sind zur Befestigung von Plattenelementen, wie z. B. Solarpaneelen, Fassadenelementen oder Deckenelementen an Profilschienen verschiedene Verfahren und Systeme bekannt. Bei Solarpaneelen werden in der Regel zunächst Profilschienen an einem Dach festgelegt, anschließend werden Befestigungselemente beispielsweise auch in der Form von Schnellbefestigern an den Profilschienen verankert und abschließend werden die Solarpaneele auf die Schnellbefestiger aufgelegt und mit Hilfe von sichtbaren Halteplättchen verklemmt. Bei Solarpaneelen ist dabei unbedingt darauf zu achten, daß die photoempfindlichen Bereiche nicht abgedeckt werden, so daß die bruchempfindlichen Paneele mit möglichst kleinen Halteklemmen und großen Kontaktflächen gehalten werden sollen, was einen schwierig handzuhabenden Zielkonflikt darstellt.

Aus dem Fassadenbau ist es bereits bekannt, Tragkonstruktionen an einer Wand anzubringen und dann die Plattenelemente mit Hilfe von Haken, Drahtbiegeteilen oder die Plattenelemente umgreifenden Profilschienen zu halten. In jedem Fall ragen auch hier Befestigungsteile der Unterkonstruktion sichtbar zwischen den Plattenelementen hervor. Ferner ist es aus dem Bereich der Fassadentechnik bekannt, Fassadenelemente aus Glas, Metall oder Stein auf einer Unterkonstruktion oder direkt auf dem Bauträger zu verkleben. Problematisch ist hierbei das Kleben auf der Baustelle, da die Klebestellen einer Verschmutzung ausgesetzt sind und die zum Aushärten eines Klebers auf eine bestimmte Festigkeit oft geforderte Temperatur-/Zeitkurve nicht immer eingehalten werden kann.

Bekannt ist es auch, Steinplatten oder auch Solarpaneele auf ihren Rückseiten mit hinterschnittenen Bohrungen zu versehen, in welche Hinterschnittdübel eingreifen, die in ein Schienensystem eingehängt oder eingeschraubt werden. Diese Systeme setzen eine aufwendige Nachbearbeitung der Paneele beziehungsweise Plattenelemente voraus, wobei diese leicht beschädigt werden können. Vorteilhaft bei diesen Varianten ist allerdings, daß nach der Montage keine Befestigungselemente mehr sichtbar sind.

Schließlich ist es im Bereich der Befestigung von Deckenelementen bei abgehängten Decken bekannt, eine Unterkonstruktion bestehend aus Profilschienen an Abhängern oder Drähten aufzuhängen und die Elemente anschließend unmittelbar an den Metallelementen festzuschrauben oder auf Profilvorsprünge aufzulegen, wobei wiederum Teile der Deckenbefestigung sichtbar bleiben.

Ein Schnellbefestigungssystem der eingangs genannten Art ist aus der DE 2 227 565 bekannt. Die FR 2 468 784 beschreibt ein Schnellbefestigungselement zur Verankerung in Profilschienen.

Die Aufgabe der vorliegenden Erfindung besteht darin, ein Schnellbefestigungssystem zur Befestigung von Plattenelementen zu schaffen, dessen Schnellbefestiger nach der Montage zugänglich bleiben. Erfindungsgemäß wir die Aufgabe dadurch gelöst, dass die Rastglieder im verrasteten Zustand teilweise aus der Führungsschiene herausragen. Dadurch ist es möglich, dass die Rastglieder im verrasteten Zustand von den Längsseiten der Profilschienen her zugänglich sind. Diese Aufgabe wird gelöst mit der Merkmalen nach Anspruch 1.

Die Montage des Schnellbefestigungssystems erfolgt in der Weise, dass an der Unterseite jedes Plattenelements gleichmäßig verteilt wenigstens drei Schnellbefestigungselemente angebracht, z. B. angeschweißt, angelötet, angeschraubt oder mit flächigen Kontaktbereichen unter definierten Umgebungsbedingungen angeklebt werden und gegebenenfalls nach dem Härten des Klebers das jeweilige Plattenelement mit den verklebten Schnellbefestigern in die Profilschiene gedrückt wird, wobei die selbstrastend ausgebildeten Schnellbefestiger mit den Profilschienen verrastet werden.

Dies bietet den Vorteil, dass zunächst die Schnellbefestiger an der Unterseite der Plattenelemente angebracht, vorzugsweise mit ihren flächigen Kontaktbereichen außerhalb der Baustelle unter definierten Umgebungsbedingungen angebracht werden und anschließend die entgültige Montage der Einheit aus Plattenelementen mit den festgelegten Schnellbefestigern durch einfaches Eindrücken in die Profilschienen durchgeführt werden kann. Es ist ohne weiteres möglich, in einer Fertigung reproduzierbare Umgebungsbedingungen zu schaffen und die Plattenelemente mit den fertig angebrachten, vorzugsweise verklebten Schnellbefestigern erst anschließend auf die Baustelle zu bringen, wo sie an den Profilschienen der Tragkonstruktion festgelegt werden. Damit besteht keine Gefahr, daß die Qualität der Klebestelle, Schweißverbindungen oder Verschraubung unter unkontrollierten Umgebungseinflüssen, wie z. B. ungünstige Temperaturen, Verschmutzungen oder schwieriger Zugänglichkeit, leidet.

Da die Plattenelemente selbst über die Verschraubungsstellen an ihren Unterseiten gehalten sind, sind auch keine sichtbaren Befestigungselemente erforderlich. Ein Verdecken eines photoempfindlichen Bereiches eines Solarpaneels kann damit ausgeschlossen werden.

Das Befestigungssystem eignet sich in gleicher Weise für Solarpaneele, die in der Regel auf Dachkonstruktionen angebracht werden, wie für Fassadenelemente, wobei dem Gewicht der Plattenelemente und der Belastbarkeit des Materials durch die Größe der flächigen Kontaktbereiche und die Anzahl der Schnellbefestiger pro Plattenelement Rechnung getragen werden kann. Selbstverständlich ist auch die Konstruktion der Schnellbefestiger im Hinblick auf die zu erwartenden Krafteinwirkungen, beispielsweise Gewichtskräfte der Plattenelemente, Windkräfte, Schneelasten oder dergleichen ausgelegt.

Die Profilschienen können zur Verrastung mit den Schnellbefestigern verschiedene Querschnitte haben, bevorzugt ist aber der Einsatz üblicher C-Profilschienen. Grundsätzlich ist es denkbar, die Schnellbefestiger so auszubilden, daß die Plattenelemente beim Verrasten mit der Profilschiene dauerhaft zur Aufnahme aller Betriebskräfte verrastet werden, d. h. die Plattenelemente können nach dem Einrasten nicht mehr relativ zu den Profilschienen verschoben werden. Da in einem solchen Fall Lagekorrekturen nur noch bedingt möglich sind, ist es empfehlenswert, durch die Anordnung der Profilschienen nur bestimmte Finraststellungen der Plattenelemente zu ermöglichen oder beim Eindrücken der Plattenelemente Schablonen oder Lehren zu verwenden, die die exakte Positionierung der Paneele mit Bezug auf die Unterkonstruktion oder benachbarte, bereits montierte Plattenelemente sicherstellt.

Denkbar sind aber auch Varianten, bei welche die Paneele derart verrastet werden, daß bei beispielsweise parallel zueinander montierten Profilschienen ein nachträgliches Verschieben in Längsrichtung noch möglich ist, um kleinere Lagekorrekturen vornehmen zu können. Die entgültige Festlegung der Plattenelemente kann dann einzeln durch Verklemmen wenigstens eines Schnellbefestigers pro Plattenelement mit der Profilschiene erreicht werden oder es werden bei einer Reihe nebeneinanderliegender Plattenelemente, die alle in fluchtenden Führungsschienen verankert sind, nur die beiden äußersten Plattenelemente bezüglich der Profilschienen unverschieblich festgelegt, während sich die übrigen Plattenelemente dann an den benachbarten Plattenelementen abstützen können.

Im Gegensatz zu üblichen Schnellbefestigern, wie sie beispielsweise zum Anbringen von Rohren an derartigen Profilschienen eingesetzt werden, verfügen die Schnellbefestiger des erfindungsgemäßen Schnellbefestigungssystems über eine Anbringungsmöglichkeit an den Plattenelementen, z. B. über die flächigen Kontaktbereiche, um eine sichere Klebeverbindung bei niedriger Flächenbelastung mit den Plattenelementen erreichen zu können. Darüber hinaus verrasten die Schnellbefestiger beim Einsetzen selbsttätig in einer Klemmstellung, wobei vorzugsweise auf weitergehende Arretierungsmaßnahmen verzichtet wird, d. h. die Plattenelemente werden allein durch ihr Aufsetzen in der gewünschten Lage fixiert.

In einer bevorzugten Ausführungsform der Erfindung ist vorgesehen, daß die Rastglieder gegen Innenflanken der nach innen weisenden Schenkelenden der Profilschiene verrasten. Während Schnellbefestiger üblicher Bauart, die nicht für die Befestigung von Plattenelementen eingesetzt werden, in der Regel flächig entweder an den Schenkelinnenseiten anliegen und/oder erst durch Anziehen einer Befestigungsschraube mit einer Schließmutter von unten gegen die Schenkelenden mit Hilfe einer auf der Schiene aufliegenden Platte verklemmt werden, d. h. einen flächigen Kontakt vorsehen, ist bei den erfindungsgemäßen Schnellbefestigern ein kleinflächiger Kontakt gegen die Innenflanken bevorzugt, da sich hierdurch eine bessere Klemmwirkung gegen Verrutschen in der Schiene erreichen läßt. Vorzugsweise sind die Klemmstellen zwischen dem Rastglied und den Innenflanken der Profilschienen punkt- oder linienförmig ausgebildet, wodurch sich das Rastglied gegen die Profilschiene verkrallen kann.

Eine bevorzugte konstruktive Umsetzung der zuvor beschriebenen kleinflächigen Kontaktstellen sieht vor, daß im eingerasteten Zustand die Schenkelenden in Schlitze in dem Rastglied ragen, deren Breite größer als die Höhe der Schenkelenden ist, wobei die Innenflanken der Schenkelenden und die Schlitzenden relativ zueinander schräg ausgebildet sind. Durch die Schrägen wird die Kontaktfläche weiter minimiert, so daß es zu dem gewünschten Verkrallen kommen kann.

Besonders bevorzugt ist eine Ausführungsform, bei welcher das Rastglied drehbar an der Grundplatte gelagert ist. Ein drehend einrastendes Rastglied bietet den Vorteil, daß die Kontaktbereiche des Rastgliedes schräg auf die Innenflanken treffen, wodurch sich eine besonders gute Klemmkraft erreichen läßt. Die Rückstellkraft auf das beim Eindrücken ausgelenkte Rastglied kann beispielsweise dadurch aufgebracht werden, daß zwischen der Grundplatte und dem an dieser drehbar gelagerten Rastglied eine Zugfeder angeordnet ist, die das Rastglied in einer Ausgangsstellung unter Vorspannung an einem Anschlag in einer Winkelstellung hält.

Ein solches plattenförmig ausgebildetes Rastglied, das beispielsweise über einen parallel zur Grundplatte abgewinkelten Bereich und einen Niet oder eine sonstige Drehlagerung drehbar an der Grundplatte gelagert sein kann, kann über Schlitze verfügen, die seitlich in den plattenförmigen Rastglied ausgebildet sind. Die Schlitze lassen sich bei einem solchen Rastglied leicht einbringen und, um die bevorzugte Schräge zwischen Innenflanken und Kontaktbereich des Rastgliedes zu erreichen, können die Schlitzenden geneigt ausgeführt sein.

Um das Ausweichen des Rastgliedes beim Eindrücken in die Profilschiene zu erreichen, verjüngt sich in einer bevorzugten Ausführungsform der Erfindung das plattenförmige Rastglied zu seinem in die Profilschiene ragenden Ende hin und kann beispielsweise in diesem Bereich trapezförmig ausgebildet sein. Durch die Neigung der Trapezflanken läßt sich die zum Eindrücken notwendige Kraft variieren, wobei Neigungswinkel der Trapezflanken mit Bezug auf die Drehachse von weniger als 60°, beispielsweise 45° bevorzugt sind.

In noch weiterer bevorzugter Ausgestaltung der Erfindung sind an der Grundplatte vier Vorsprünge angeformt, beispielsweise als Laschen umgebogen, die die Außenflanken der Profilschiene übergreifen. Diese Vorsprünge können größere Kräfte an den Außenflanken der Profilschienen abstützen, was gegenüber einem Abstützen an den Innenflanken einer Profilschiene den Vorteil hat, daß die Profilschiene nicht aufgeweitet werden kann.

Der Abstand zwischen den Vorsprüngen kann größer sein als die Breite der Profilschiene, um eventuelle Ungenauigkeiten beim Aufkleben der Befestiger auf das Plattenelement oder Ungenauigkeiten bei der Montage der Profilschienen ausgleichen zu können.

Eine weitere bevorzugte Ausführungsform der Erfindung sieht vor, daß die Grundplatten der Schnellbefestiger in eingerastetem Zustand mit Abstand zu der Oberseite der Profilschiene liegen. Dadurch bleiben die Schnellbefestiger auch nach der Montage der Plattenelemente noch zugänglich.

Vorzugsweise sind die Rastglieder durch die Zugänglichkeit in eine entriegelte Stellung bewegbar sind, wodurch Korrekturen insbesondere auch bei Ausführungsformen vorgenommen werden können, die ein endgültiges Verklemmen allein durch das Einrasten der Schnellbefestiger bewirken.

Zum Erreichen niedriger Herstellkosten sind die Grundplatten und die Rastglieder der Schnellbefestiger vorzugsweise aus Blech gefertigt, wobei ein einfacher Schnellbefestiger aus lediglich vier Teilen bestehen muß, nämlich der Grundplatte, dem Rastglied, einer Drehlagerung, beispielsweise in Form des die Grundplatte und das Rastglied verbindenden Niets, und einer Rückstellfeder.

Nachfolgend wird anhand der beigefügten Zeichnungen näher auf Ausführungsbeispiele der Erfindung eingegangen. Es zeigen:
- Fig. 1: eine Schrägansicht auf einen Schnellbe- festiger eines Schnellbefestigungssys- tems für Plattenelemente;
- Fig. 2: eine Schrägansicht des Schnellbefesti- gers gemäß Fig. 1 von unten;
- Fig. 3: eine perspektivische Ansicht eines Schnellbefestigungssystems mit dem Schnellbefestiger gemäß Fig. 1 und ei- ner Profilschiene mit im wesentlichen C-förmigem Querschnitt;
- Fig. 4: eine Schrägansicht des Schnellbefesti- gungssystems gemäß Fig. 3 in anderer Perspektive;
- Fig. 5: eine Schrägansicht des Schnellbefesti- gungssystems mit an der Profilschiene festgelegtem Schnellbefestiger;
- Fig. 6: eine weitere Ausführungsform eines Schnellbefestigers;
- Fig. 7: eine Schrägansicht eines Schnellbefe- stigungssystems bestehend aus dem Schnellbefestiger gemäß Fig. 6 und ei- ner Profilschiene mit C-förmigem Quer- schnitt.

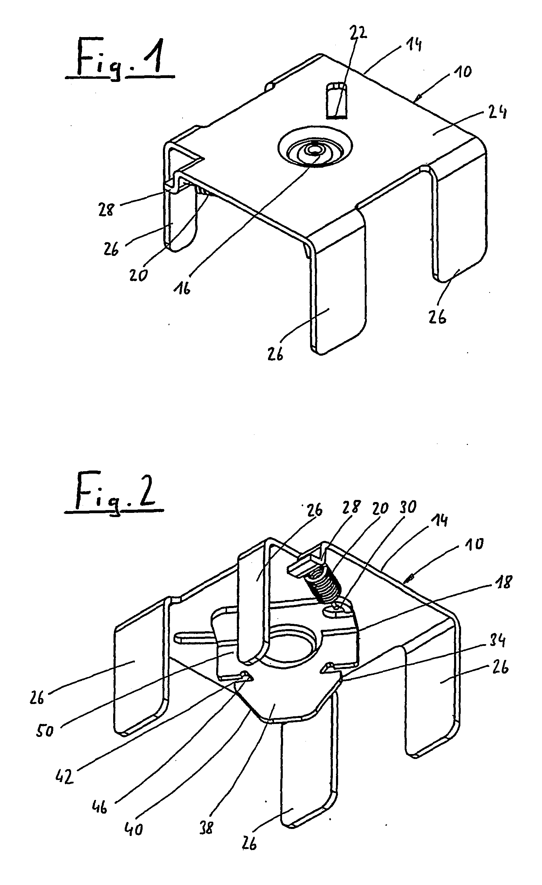

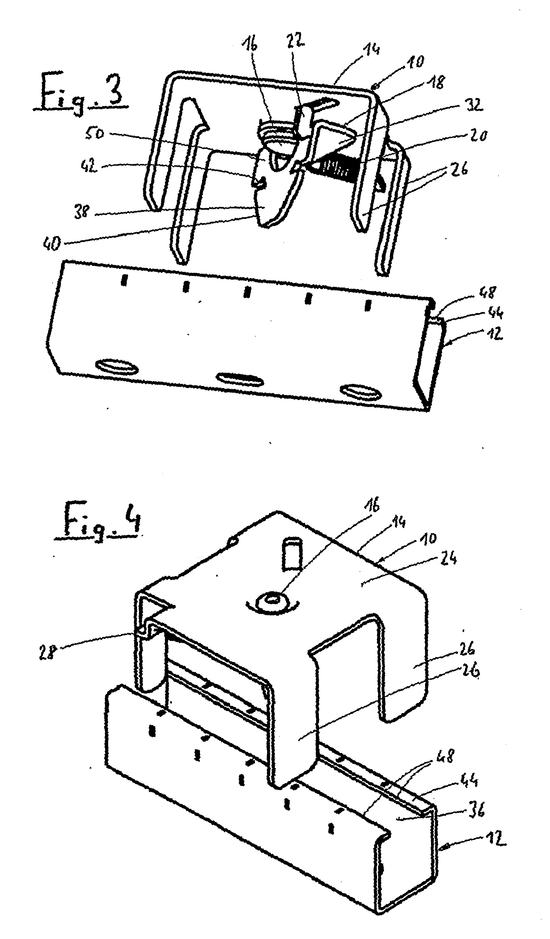

In Fig. 1 ist eine perspektivische Ansicht eines Schnellbefestigers 10 gezeigt, der Bestandteil eines Schnellbefestigungssystems (siehe Fig. 3 - 5) ist, das neben dem Schnellbefestiger 10 auch noch wenigstens eine Profilschiene 12 mit C-förmigem Querschnitt vorsieht. Die Profilschienen 12 werden unmittelbar oder mit Hilfe einer zusätzlichen Tragkonstruktion an einer Wand, Decke oder auf einem Dach angebracht, je nachdem, welche Art von Plattenelementen an dem Gebäude festgelegt werden soll, beispielsweise Solarpaneele auf einem Dach, Fassadenelemente an einer Wand oder Deckenelemente rauminnenseitig zum Ausbilden einer Abhängdecke.

In Fig. 1 und 2 ist der Schnellbefestiger 10 in zwei Schrägansichten näher dargestellt. Der Schnellbefestiger 10 besteht im wesentlichen aus einer Grundplatte 14, einem mit Hilfe eines Niets 16 drehbar an der Grundplatte 14 gelagerten Rastglied 18 und einer zwischen der Grundplatte 14 und dem drehbaren Rastglied angeordneten Zugfeder 20, die das Rastglied 18 in einer Ausgangsstellung unter Vorspannung an einem Anschlag 22 hält, der als Blechlasche einstückig mit der Grundplatte 14 verbunden ist.

Die Grundplatte 14 besitzt einen flächigen Kontaktbereich 24 über welchen sie mit der Unterseite eines Plattenelements (nicht gezeigt) verklebt wird, beispielsweise einem Solarpaneel, einem Fassadenelement oder einem Deckenelement. Die Fläche des Kontaktbereiches 24 ist entsprechend den zu erwartenden Belastungen dimensioniert, wobei die Klebeverbindung vorzugsweise unter definierten Bedingungen und nicht auf einer Baustelle hergestellt wird, wo ungünstige Temperaturbedingungen oder Staub die Festigkeit der Klebeverbindung beeinträchtigen könnten. Die Grundplatte 14 ist einstückig aus Blech hergestellt, wobei an ihren Ecken Blechlaschen 26 als Vorsprünge rechtwinklig umgebogen sind, die die Profilschiene 12 mit nicht allzu großem Spiel übergreifen. Die Blechlaschen 26 liegen mit ihren Flächen senkrecht zur Längserstreckung der Profilschiene 12, da bei dieser Ausbildung höhere Querkräfte durch die Blechlaschen 26 übertragbar sind. An der Grundplatte 14 ist ferner ein Widerlager 28 ausgestellt, an welchem die Zugfeder 20 eingehängt ist.

Das andere Ende der vorgespannten Zugfeder 20 ist in einer Ausnehmung 30 an dem ebenfalls aus Blech gefertigtem Rastglied 18 eingehängt. Das Rastglied 18 besteht aus einem parallel zur Grundplatte 14 liegenden Bereich 32, der von dem Niet 16 zur Bildung der Drehführung an der Grundplatte 14 durchstoßen wird. Weiterhin besitzt das Rastglied 18 einen senkrecht zu diesem Parallelbereich 32 abgewinkelten Rastbereich 34, der nach dem Einrasten des Schnellbefestigers 10 in der Führungsschiene 12 teilweise in den Längsschlitz 36 der Führungsschiene 12 ragt. Der Rastbereich 34 befindet sich in einer Ausgangsstellung (siehe Fig. 2) mit seiner Längserstreckung in einer Winkelstellung, die um 45° bezüglich der Längserstreckung der Profilschiene 12 gedreht ist.

Der Rastbereich 34 besitzt einen trapezartig ausgebildeten Einsteckteil 38, dessen Trapezflanken eine Neigung von ungefähr 45° mit Bezug auf die Drehachse des Rastgliedes 18 besitzen. Oberhalb dieses trapezartigen Einsteckbereiches sind zwei Schlitze 42 vorgesehenen, deren Höhe größer ist als die Materialstärke der nach innen abgewinkelten Schenkelenden 44 der Profilschiene 12. Die Schlitzenden 46 sind schräg bezüglich der Schlitzerstreckung ausgebildet, beim gezeigten Ausführungsbeispiel ungefähr 45°. Dies sorgt dafür, daß nach dem Einstecken die Innenflanken 48 der Schenkelenden 44 punktartig an diesen Schlitzenden anliegen, so daß sich das Rastglied 18 mit den Innenflanken 18 verkrallen kann.

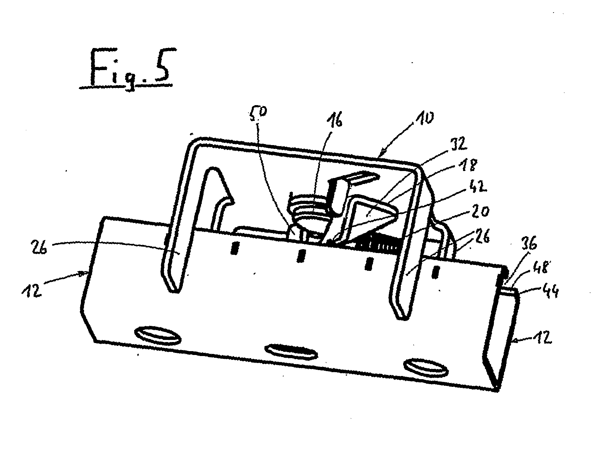

Die Lage der Schlitze 42 im Rastbereich 34 des Rastgliedes 18 definiert auch die spätere Position der Grundplatte 14 in einem bestimmten Abstand zu der Oberseite der Profilschienen 12. Der Abstand definiert sich durch die Höhe eines Abstandsteils 50 zwischen dem parallel zur Grundplatte 14 liegenden Bereich 32 des Rastgliedes 18 und den Schlitzen 42. Wie insbesondere aus Fig. 5 gut zu ersehen ist, bleibt dieser Abstandsbereich 50 auch nach dem Aufsetzen eines Schnellbefestigers 10 mit dem aufgeklebten Plattenelement von der Seite her zugänglich, so daß nach einem fehlerhaften Aufsetzen das Rastglied durch seitliches Untergreifen des Plattenelements zwischen zwei Blechlaschen 26 gelöst und eine Lagekorrektur vorgenommen werden kann.

Wie bereits erwähnt, werden zunächst wenigstens drei, vorzugsweise wenigstens vier Schnellbefestiger 10 in bestimmten Positionen an die Unterseite eines Plattenelementes geklebt. Nach dem Aushärten des Klebers wird das solchermaßen vorbereitete Plattenelement zur Baustelle gebracht, wo zuvor wenigstens zwei Profilschienen vorzugsweise in paralleler Lage zueinander auf einem Dach, an einer Wand oder an einer Tragkonstruktion beispielsweise einer Abhängdecke angebracht worden sind. Die Schnellbefestiger 10 sind an dem Plattenelement so positioniert, daß sich beim Aufsetzen die in Fig. 3 gezeigte Stellung bezüglich der Profilschienen 12 ergibt. Wird das Plattenelement nun in Richtung der Profilschienen 12 gedrückt, gelangen die Trapezflanken 40 in Anlage an die Oberkanten der Innenflanken 48 der Schenkelenden 44. Dadurch wird ein Moment auf das Rastglied 18 ausgeübt, so daß sich dieses von seinem Anschlag 22 abhebt und verdreht, bis die Schenkelenden 44 in den Bereich der Schlitze 42 gelangen. Das Rastglied 18 schnappt unter der Wirkung der Feder zurück, wobei sich die Innenflanken 18 der Schenkelenden 44, wie bereits erwähnt, an die schrägen Schlitzenden 46 punktuell anlegen. Die Vorspannkraft der Zugfeder 20 stützt sich entsprechend ausschließlich an den Schenkelenden ab, d. h., das Rastglied 18 schnappt nicht bis zu dem Anschlag 22 zurück.

Nach dem Aufsetzen ergibt sich die in Fig. 5 gezeigte Stellung, in welcher das Plattenelement in der Regel bereits entgültig montiert ist. Korrekturen können noch durch seitliches Untergreifen des Plattenelements und manuelles Zurückstellen des Rastglieds 18 vorgenommen werden, wobei es zweckmäßig ist, zunächst Plattenelemente in Richtung der Profilschienen 12 nebeneinander anzuordnen, um möglichst lange noch eine Korrekturmöglichkeit zu haben, da nach dem Aufsetzen der benachbarten Reihen die Rastglieder 18 nicht mehr zugänglich sind. Zur Vermeidung von Positionierungsfehlern kann es zweckdienlich sein, beim Aufsetzen der Plattenelemente Schablonen oder Lehren zu verwenden, die eine exakte absolute Positionierung oder relative Positionierung zu einem benachbarten Plattenelement ermöglichen.

Durch eine andere Auslegung der Rastglieder 18 mit geringerer Neigung zum Verkrallen und/oder geringeren Klemmkräften ist es auch möglich, eine Verschiebbarkeit der Plattenelemente auch nach dem Aufsetzen zu ermöglichen, um Lagekorrekturen vornehmen zu können. Bei einer solchen Lösung sollten dann allerdings wenigstens an den äußersten Plattenelementen einer Reihe zusätzliche Maßnahmen getroffen werden, um die Schnellbefestiger in einem zusätzlichen Arbeitsgang unverschieblich an den Profilschienen 12 zu fixieren.

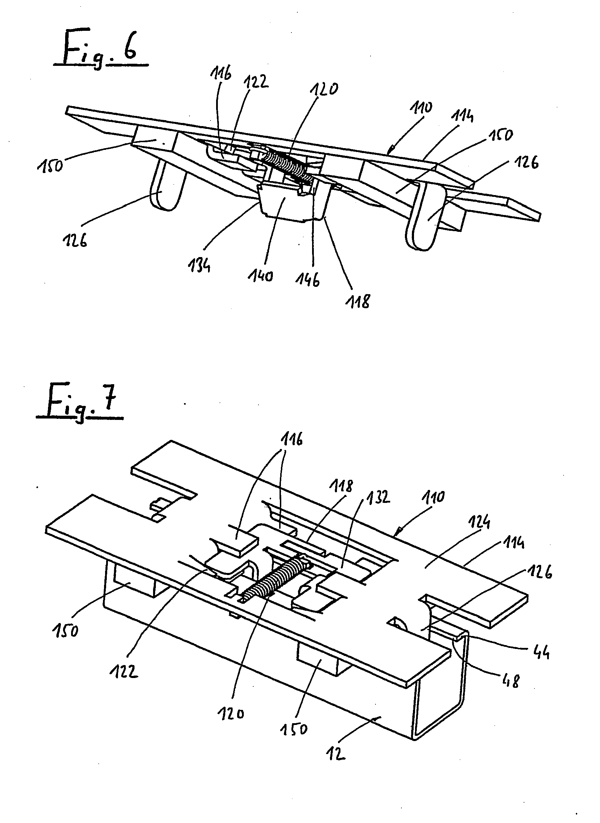

Neben Ausführungsformen mit einem drehbar ausgebildeten Rastglied, ist auch eine lineare Beweglichkeit eines Rastgliedes 118 möglich, wie dies bei dem Schnellbefestiger 110 gemäß Fig. 6 und 7 realisiert ist. Dieser Schnellbefestiger 110 verfügt wiederum über eine Grundplatte 114 mit einem flächigen Kontaktbereich 124, über welchen der Schnellbefestiger 110 mit der Unterseite eines anzubringenden Plattenelements verklebt wird. Das Rastglied 118 verfügt wiederum über einen parallel zur Grundplatte 114 liegenden Bereich 132, der linear verschieblich, quer zur Längserstreckungsrichtung der Profilschienen 12 an der Grundplatte geführt ist, wobei die Führung bei dem gezeigten Ausführungsbeispiel durch wechselweise ausgestellte Blechlaschen 116 erreicht ist. Das Rastglied 118 ist durch eine vorgespannte Zugfeder 120 in der in Fig. 7 gezeigten Ausgangsstellung gegen einen Anschlag 122 vorbelastet.

Der in die Profilschiene 12 ragende Bereich 134 des Rastgliedes 118 besitzt eine Schrägflanke 140, die eine Verlagerung des Rastgliedes 118 unter weiterer Vorspannung der Zugfeder 120 beim Eindrücken in die Rastschiene bewirkt. Beim Einstekken des Schnellbefestigers 110 gelangen zunächst elastische Auflager 150 an den Oberseiten der Profilschiene 12 in Anlage. Durch geringfügige Erhöhung des Druckes werden diese elastischen Auflager 150 etwas deformiert, so daß der Rastbereich 134 unter der Wirkung der Zugfeder 120 unter ein Schenkelende 44 schnappen kann, wobei sich die Innenflanke 48 des Schenkelendes 44 an einer Anschlagkante 146 abstützt. In Querrichtung ist der in Fig. 6 und 7 gezeigte Schnellbefestiger 110 mit Hilfe zweier Blechlaschen 126 an der Profilschiene 12 abgestützt, die zwischen die Innenflanken 48 in die Profilschiene 12 ragen. Zur Verbesserung der Klemmwirkung kann bei dem in Fig. 6 und 7 gezeigten Schnellbefestiger 110 wenigstens ein weiteres Rastglied 118 vorgesehen sein, das sich vorzugsweise gegenläufig zu dem ersten Rastglied bewegt, so daß eine Abstützung an beiden gegenüberliegenden Innenflanken 48 der Profilschiene 12 ermöglicht ist.

## Patentansprüche

1. Schnellbefestigungssystem in Kombination mit einer Profilschiene zur Befestigung von Plattenelementen wie z. B. Solarpaneelen, Fassadenelementen oder Deckenelementen mit dach-, decken- oder wandseitig festgelegten Profilschienen (12) mit im wesentlichen C-förmigem Querschnitt und Schnellbefestigern (10; 110), die an den Profilschienen (12) und den Plattenelementen festlegbar sind, wobei die Schnellbefestiger (10; 110) jeweils eine Grundplatte (14; 114), die an der Unterseite eines Plattenelements anbringbar ist, und ein Rastglied (18; 118) aufweisen, das beim Eindrücken in die Profilschiene (12) gegen die Kraft einer Rückstellfeder (20; 120) ausweicht und beim Erreichen der Endstellung mit der Profilschiene (12) verrastet, **dadurch gekennzeichnet, daß** das Rastglied 18, 50) im verrasteten Zustand teilweise aus der Profilschiene (12) herausragt.

2. Schnellbefestigungssystem in Kombination mit einen Profilschiene nach Anspruch 1, **dadurch gekennzeichnet, daß** das Rastglied (18, 46; 118, 146) gegen die Innenflanken (48) der nach innen weisenden Schenkelenden (44) der Profilschiene (12) verrastet.

3. Schnellbefestigungssystem in Kombination mit einen Profilschiene nach Anspruch 2, **dadurch gekennzeichnen, daß** die Klemmstellen zwischen dem Rastglied (18; 118) und den Innenflanken (48) der Profilschiene (12) punkt- oder linienförmig ausgebildet sind, wobei im eingerasteten Zustand die Schenkelenden (44) in Schlitze (42) in dem Rastglied (18, 34) ragen, deren Breite größer als die Höhe der Schenkelenden (44) ist, wobei die Innenflanken (48) der Schenkelenden (44) und die Schlitzenden (46) relativ zueinander geneigt ausgebildet sind.

4. Schnellbefestigungssystem in Kombination mit einen Profilschiene nach einem der vorhergehenden Ansprüche, **dadurch gekennzeichnet, daß** das Rastglied (18) drehbar an der Grundplatte (14) gelagert ist.

5. Schnellbefestigungssystem in Kombination mit einen Profilschiene nach Anspruch 3 oder 4, **dadurch gekennzeichnet, daß** das Rastglied aus einem plattenförmigen Teil (34) gebildet ist und die Schlitze (42) seitlich in dem plattenförmigen Rastglied (18, 34) ausgebildet sind.

6. Schnellbefestigungssystem in Kombination mit einen Profilschiene nach Anspruch 5, **dadurch gekennzeichnet, daß** das plattenförmige Rastglied (18, 34) sich in seinem in die Profilschiene (12) ragenden Bereich (38) zu seinem Ende hin trapezförmig verjüngt, wobei die Trapezflanken (40) um weniger als 60°, vorzugsweise ungefähr 45° bezüglich der Drehachse geneigt sind.

7. Schnellbefestigungssystem in Kombination mit einen Profilschiene nach Anspruch 6, **dadurch gekennzeichnet, daß** das plattenförmige Rastglied (18, 34) in der Ausgangsstellung bezüglich der Schienenlängsachse verdreht liegt.

8. Schnellbefestigungssystem in Kombination mit einen Profilschiene nach einem der Ansprüche 4 - 7, **dadurch gekennzeichnet, daß** zwischen der Grundplatte (14, 28) und dem an dieser drehbar gelagerten Rastglied (18, 30) eine Zugfeder (20) angeordnet ist, die das Rastglied (18) in einer Ausgangsstellung unter Vorspannung an einem Anschlag (22) hält.

9. Schnellbefestigungssystem in Kombination mit einen Profilschiene nach einem der vorhergehenden Ansprüche, **dadurch gekennzeichnet, daß** die Grundplatte (14) im eingerasteten Zustand mit Abstand zu der Oberseite der Profilschiene (12) liegt.

10. Schnellbefestigungssystem in Kombination mit einen Profilschiene nach einem der vorhergehenden Ansprüche, **dadurch gekennzeichnet, daß** das Rastglied (18, 50) im verrasteten Zustand von der Flanke der Profilschiene (12) her zugänglich und in eine entriegelte Stellung bewegbar ist.

11. Schnellbefestigungssystem in Kombination mit einen Profilschiene nach einem der vorhergehenden Ansprüche, **dadurch gekennzeichnet, dass** der Schnellbefestiger (10) aus der Grundplatte (14), dem Rastglied (18), einer Drehlagerung (16) und der Rückstellfeder (20) besteht, wobei die Grundplatte (14) und das Rastglied (18) aus Blech gefertigt sind.

## Claims

1. A quick-fastening system in combination with a profile rail for fastening panel elements, for example solar panels, façade elements or floor or ceiling elements with profile rails (12) located on the roof, floor or ceiling or wall side and of substantially C-shaped cross-section, and quick-fasteners (10;110) which can be located on the profile rails (12) and the panel elements, wherein the quick-fasteners (10;110) each have a base plate (14;114), which can be mounted on the underside of a panel element, and a detent member (18;118) which upon being pressed into the profile rail (12) is deflected against the force of a restoring spring (20;120) and upon reaching the end position engages with the profile rail (12), **characterised in that** in the engaged condition the detent member (18,50) projects partially from the profile rail (12).

2. A quick-fastening system in combination with a profile rail according to Claim 1, **characterised in that** the detent member (18,46; 118,146) engages against the inner flanks (48) of the inwardly facing arm ends (44) of the profile rail (12).

3. A quick-fastening system in combination with a profile rail according to Claim 2, **characterised in that** the clamping points between the detent member (18;118) and the inner flanks (48) of the profile rail (12) are of point-like or linear form, wherein in the engaged condition the arm ends (44) project into slots (42) in the detent member (18,34), the width of which is greater than the height of the arm ends (44), wherein the inner flanks (48) of the arm ends (44) and the slot ends (46) are formed inclined relative to one another.

4. A quick-fastening system in combination with a profile rail according to any one of the preceding Claims, **characterised in that** the detent member (18) is rotatably mounted on the base plate (14).

5. A quick-fastening system in combination with a profile rail according to Claim 3 or 4, **characterised in that** the detent member is formed from a plate-like part (34) and the slots (42) are formed laterally in the plate-like detent member (18,34).

6. A quick-fastening system in combination with a profile rail according to Claim 5, **characterised in that,** in its portion (38) projecting into the profile rail (12), the plate-like detent member (18,34) tapers trapezoidally towards its end, wherein the trapezium flanks (40) are inclined in relation to the axis of rotation by less than 60°, preferably approximately 45°.

7. A quick-fastening system in combination with a profile rail according to Claim 6, **characterised in that** in its initial position the plate-like detent member (18,34) is in a rotated position in relation to the rail longitudinal axis.

8. A quick-fastening system in combination with a profile rail according to any one of Claims 4 to 7, **characterised in that** between the base plate (14,28) and the detent member (18,30) rotatably mounted thereon there is provided a tension spring (20) which retains the detent member (18) in an initial position under preloading against a stop member (22).

9. A quick-fastening system in combination with a profile rail according to any one of the preceding Claims, **characterised in that** in the engaged condition the base plate (14) is situated at a distance from the upper side of the profile rail (12).

10. A quick-fastening system in combination with a profile rail according to any one of the preceding Claims, **characterised in that** in the engaged condition the detent member (18,50) is accessible from the flank of the profile rail (12) and can be moved into a released position.

11. A quick-fastening system in combination with a profile rail according to any one of the preceding Claims, **characterised in that** the quick-fastener (10) comprises the base plate (14), the detent member (18), a pivot mounting (16) and the restoring spring (20), wherein the base plate (14) and the detent member (18) are made from sheet material.

## Revendications

1. Système de fixation rapide en combinaison avec un rail profilé pour fixer des éléments en forme de plaques tels que des panneaux solaires, des éléments de façade ou des éléments de couverture, comprenant des rails profilés (12) fixés en toiture, en couverture ou en paroi, ayant une section essentiellement en forme de C et des organes de fixation rapide (10, 110) qui se fixent aux rails profilés (12) et aux éléments en forme de plaques,
les organes de fixation rapide (10, 110) se composent chacun d'une plaque de base (14, 114) pour venir contre la face inférieure d'un élément en forme de plaque et d'un organe d'accrochage (18, 118) qui, lorsqu'il est enfoncé dans le rail profilé (12), s'échappe contre la force d'un ressort de rappel (20, 120) et s'accroche au rail profilé (12), lorsqu'il atteint sa position de fin de course,
système **caractérisé en ce que**
à l'état accroché l'organe d'accrochage (18, 50) dépasse en partie du rail profilé (12).

2. Système de fixation rapide en combinaison avec un rail profilé selon la revendication 1,
**caractérisé en ce que**
l'organe d'accrochage (18, 46 ; 118, 146) s'accroche contre les flancs intérieurs (48) des extrémités de branches (44) tournées vers l'intérieur du rail profilé (12).

3. Système de fixation rapide en combinaison avec un rail profilé selon la revendication 2,
**caractérisé en ce que**
les points de serrage entre l'organe d'accrochage (18, 118) et les flancs intérieurs (48) du rail profilé (12), sont des points ou des lignes, et
à l'état accroché, les extrémités de branches (44) viennent dans des fentes (42) dans l'organe d'accrochage (18, 34) dont la largeur est supérieure à la hauteur des extrémités de branches (44),
les flancs intérieurs (48) des extrémités de branches (44) et des extrémités de fentes (46) sont inclinés les uns par rapport aux autres.

4. Système de fixation rapide en combinaison avec un rail profilé selon l'une des revendications précédentes,
**caractérisé en ce que**
l'organe d'accrochage (18) est monté à rotation sur la plaque de base (14).

5. Système de fixation rapide en combinaison avec un rail profilé selon la revendication 3 ou 4,
**caractérisé en ce que**
l'organe d'accrochage est une pièce (34) en forme de plaque et les fentes (42) sont réalisées latéralement dans l'organe d'accrochage en forme de plaque (18, 34).

6. Système de fixation rapide en combinaison avec un rail profilé selon la revendication 5,
**caractérisé en ce que**
l'organe d'accrochage (18, 34) en forme de plaque diminue suivant une forme trapézoïdale, dans sa zone (38) venant en saillie dans le rail profilé (12) jusqu'à son extrémité,
les flancs (40) du trapèze étant inclinés de moins de 60° et de préférence d'environ 45° par rapport à l'axe de rotation.

7. Système de fixation rapide en combinaison avec un rail profilé selon la revendication 6,
**caractérisé en ce que**
dans sa position de sortie, l'organe d'accrochage (18, 34) en forme de plaque, est tourné par rapport à l'axe longitudinal du rail.

8. Système de fixation rapide en combinaison avec un rail profilé selon l'une des revendications 4 à 7,
**caractérisé par**
un ressort de traction (20) entre la plaque de base (14, 28) et l'organe d'accrochage (18, 30) monté à rotation sur la plaque de base (14, 28), le ressort de traction maintenant l'organe d'accrochage (18) dans sa position de sortie sous précontrainte contre une butée (22).

9. Système de fixation rapide en combinaison avec un rail profilé selon l'une des revendications précédentes,
**caractérisé en ce qu'**
à l'état accroché, la plaque de base (14) est située à distance du côté supérieur du rail profilé (12).

10. Système de fixation rapide en combinaison avec un rail profilé selon l'une des revendications précédentes,
**caractérisé en ce qu'**
à l'état accroché, l'organe d'accrochage (18, 50) est accessible à partir du flanc du rail profilé (12) et peut être mis dans sa position déverrouillée.

11. Système de fixation rapide en combinaison avec un rail profilé selon l'une des revendications précédentes,
**caractérisé en ce que**
l'organe de fixation rapide (10) se compose de la plaque de base (14), de l'organe d'accrochage (18), d'un palier de rotation (16) et d'un ressort de rappel (20),
la plaque de base (14) et l'organe d'accrochage (18) étant fabriqués en tôle.
